(19) Europäisches Patentamt
European Patent Office
Office européen des brevets

(11) **EP 4 391 524 B1**

(12) **FASCICULE DE BREVET EUROPEEN**

(45) Date de publication et mention de la délivrance du brevet:
**06.05.2026 Bulletin 2026/19**

(21) Numéro de dépôt: **23217303.9**

(22) Date de dépôt: **15.12.2023**

(51) Classification Internationale des Brevets (IPC):
**H04N 7/18** *(2006.01)* **H04R 5/02** *(2006.01)*
**H04S 7/00** *(2006.01)*

(52) Classification Coopérative des Brevets (CPC):
**H04N 7/183; H04S 7/301**

(54) **DÉTECTION DU CHANGEMENT DE POSITION D'UN BOÎTIER DÉCODEUR PAR ANALYSE D'IMAGES**

DETEKTION DER POSITIONSÄNDERUNG EINES SET-TOP-BOX DURCH BILDANALYSE

SET-TOP BOX POSITION CHANGE DETECTION USING IMAGE ANALYSIS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **19.12.2022 FR 2213840**

(43) Date de publication de la demande:
**26.06.2024 Bulletin 2024/26**

(73) Titulaire: **Sagemcom Broadband SAS**
**92270 Bois-Colombes (FR)**

(72) Inventeurs:
• **SCHOTT, Vincent**
**92270 BOIS-COLOMBES (FR)**
• **OBEID, Jad**
**92270 BOIS-COLOMBES (FR)**

(74) Mandataire: **Cabinet Boettcher et al**
**5, rue de Vienne**
**75008 Paris (FR)**

(56) Documents cités:
EP-A1- 3 367 677      US-A1- 2009 067 725
US-A1- 2016 134 986   US-A1- 2017 289 723
US-A1- 2018 192 189   US-A1- 2019 075 418

## Description

L'invention concerne le domaine des boîtiers décodeurs munis d'au moins un haut-parleur et d'une caméra.

ARRIERE PLAN DE L'INVENTION

On envisage de concevoir des boîtiers décodeurs (ou STB, pour *Set-Top Box*) munis de nouveaux composants pour mettre en œuvre de nouvelles fonctionnalités.

Ces nouveaux composants comprennent par exemple un ou plusieurs haut-parleurs qui permettent ainsi au boîtier décodeur de restituer des signaux sonores.

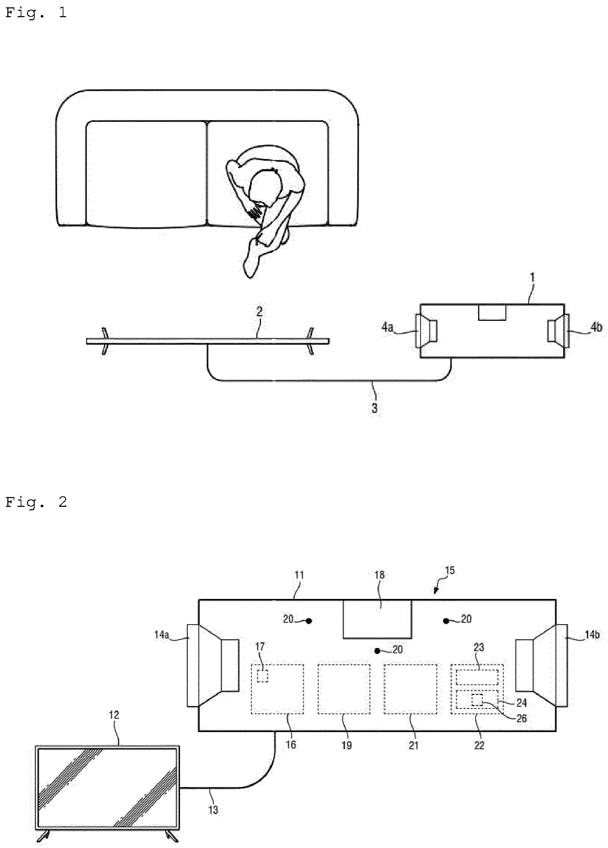

En référence à la figure 1, un tel boîtier décodeur 1 est ainsi relié à un téléviseur 2 par un câble 3 permettant une connexion audio/vidéo. Ce câble 3 est par exemple un câble HDMI (pour *High-Definition Multimedia Interface*). Le boîtier décodeur 1 comprend ici par exemple un premier haut-parleur 4a et un deuxième haut-parleur 4b situés de chaque côté du boîtier décodeur 1. Les haut-parleurs 4a, 4b du boîtier décodeur 1 peuvent mettre en œuvre un système multicanal en étant éventuellement associés à d'autres haut-parleurs du boîtier décodeur 1, aux haut-parleurs du téléviseur 2 ou à ceux d'un ou de plusieurs autres équipements de restitution audio, tels qu'une enceinte connectée ou une barre de son par exemple.

Le boîtier décodeur 1, lorsqu'il se trouve dans une position initiale et une orientation initiale « prédéfinies », utilise des paramètres audio initiaux pour que la restitution sonore soit optimisée dans une position d'écoute optimale initiale. Cette position d'écoute optimale initiale correspond typiquement à la position assise d'un utilisateur dans un fauteuil ou un canapé, face au téléviseur 2 et au boîtier décodeur 1, à une distance prédéfinie de ceux-ci. Les paramètres audio initiaux sont par exemple définis en usine mais pourraient aussi être définis au cours d'une phase de calibration réalisée au moment de l'installation du boîtier décodeur 1 chez l'utilisateur.

Or, en service, il est fort possible que la position et/ou l'orientation du boîtier décodeur 1 soient modifiées par l'utilisateur, soit de manière volontaire soit par inadvertance. Les paramètres audio initiaux n'optimisent donc plus la restitution sonore dans la position d'écoute optimale initiale, bien que celle-ci soit toujours utilisée par l'utilisateur. L'utilisateur ne profite donc plus de manière optimale du rendu acoustique de son boîtier décodeur 1.

US 2018/192189 A1 décrit un dispositif "spatial audio" qui traite 1es signaux audio provenant d'un appareil hôte et d'appareils distants en fonction de leur orientation et de leur emplacement relatifs. Le système détecte des changements de position relative en comparant des images capturées par une caméra de l'appareil hôte. US 2016/134986 A1 décrit un système audio pour télévision qui détecte la position de l'utilisateur dans des images capturées par une caméra et ajuste les filtres des haut-parleurs pour une expérience audio optimale à la position de l'utilisateur. Le système s'adapte lorsque l'utilisateur change de position. US 2019/075418 A1 décrit un système de virtualisation audio tridimensionnelle pour une télévision avec adaptation de la zone d'écoute optimale, utilisant des caméras pour déterminer la position de l'auditeur et ajustant le traitement du son en fonction de la position de l'auditeur. Le système s'adapte lorsque l'auditeur change de position.

OBJET DE L'INVENTION

L'invention a pour objet d'optimiser la restitution sonore d'un boîtier décodeur en service.

RESUME DE L'INVENTION

L'invention est définie par les revendications indépendantes attenantes. Des modes de réalisation avantageux sont décrit dans les revendications dépendantes.

En vue de la réalisation de ce but, on propose un procédé d'optimisation d'une restitution sonore réalisée par un boîtier décodeur qui comprend au moins un haut-parleur et auquel au moins une caméra est solidarisée, comprenant les étapes de :

- acquérir au moins une image initiale produite par la caméra alors que le boîtier décodeur se trouve dans une position initiale et dans une orientation initiale, le boîtier décodeur utilisant alors des paramètres audio initiaux pour optimiser la restitution sonore ;
- puis, acquérir au moins une image courante produite par la caméra ;
- analyser l'image courante et l'image initiale pour détecter un changement de position et/ou d'orientation du boîtier décodeur ;
- effectuer au moins une action corrective permettant d'optimiser la restitution sonore suite au changement de position et/ou d'orientation du boîtier décodeur.

L'unité de traitement utilise donc l'image initiale et l'image courante pour détecter un changement de position et/ou d'orientation du boîtier décodeur. Une action corrective peut alors être effectuée pour corriger les effets de ce déplacement sur le rendu acoustique du boîtier décodeur. L'utilisateur peut donc profiter au mieux des qualités du boîtier décodeur même si celui-ci a été déplacé volontairement ou par inadvertance.

On propose de plus un procédé d'optimisation tel que précédemment décrit, dans lequel l'analyse de l'image courante et de l'image initiale comprend les étapes de :

- déterminer une matrice d'homographie planaire permettant de passer de l'image courante à l'image initiale ;
- analyser ladite matrice d'homographie planaire pour détecter le changement de position et/ou d'orientation du boîtier décodeur.

On propose de plus un procédé d'optimisation tel que précédemment décrit, dans lequel l'analyse de la matrice d'homographie planaire comprend les étapes de :

- comparer ladite matrice d'homographie planaire avec une matrice d'identité ;
- ne pas détecter de changement de position ni d'orientation du boîtier décodeur lorsqu'une valeur absolue d'une différence entre chaque élément de la matrice d'homographie planaire et un élément correspondant de la matrice d'identité est inférieure à un premier seuil de détection prédéterminé ;
- détecter un changement de position et/ou d'orientation du boîtier décodeur dans le cas contraire.

On propose de plus un procédé d'optimisation tel que précédemment décrit, dans lequel l'analyse de l'image courante et de l'image initiale comprend les étapes de :

- détecter dans l'image initiale, en utilisant une transformée de Hough, un premier nombre de premières lignes ayant chacune des premières coordonnées polaires ;
- détecter dans l'image courante, en utilisant la transformée de Hough, un deuxième nombre de deuxièmes lignes ayant chacune des deuxièmes coordonnées polaires ;
- évaluer un nombre de lignes communes à l'image initiale et à l'image courante ;
- détecter un changement de position et/ou d'orientation du boîtier décodeur si le nombre de lignes communes est inférieur à un deuxième seuil de détection prédéterminé.

On propose de plus un procédé d'optimisation tel que précédemment décrit, comprenant en outre les étapes de :

- calculer un indice de confiance qui dépend du premier nombre et du deuxième nombre ;
- comparer l'indice de confiance avec un seuil de confiance prédéterminé ;
- décider, en fonction d'un résultat de ladite comparaison, de valider ou non un résultat de l'étape de détection du changement de position et/ou d'orientation.

On propose de plus un procédé d'optimisation tel que précédemment décrit, dans lequel l'action corrective comprend les étapes de :

- déterminer une nouvelle position et/ou une nouvelle orientation du boîtier décodeur ;
- produire de nouveaux paramètres audio pour optimiser la restitution sonore alors que le boîtier décodeur se trouve dans la nouvelle position et/ou la nouvelle orientation.

On propose de plus un procédé d'optimisation tel que précédemment décrit, comprenant les étapes de :

- déterminer, dans un repère lié à l'image courante, des coordonnées d'une position d'écoute optimale initiale dans laquelle la restitution sonore était optimisée alors que le boîtier décodeur se trouvait dans la position initiale et l'orientation initiale ;
- produire les nouveaux paramètres audio de sorte que la restitution sonore est à nouveau optimisée dans la position d'écoute optimale initiale.

On propose de plus un procédé d'optimisation tel que précédemment décrit, dans lequel les nouveaux paramètres audio comprennent un gain appliqué sur un volume courant, qui dépend de la position d'écoute optimale initiale et de la nouvelle position et/ou de la nouvelle orientation du boîtier décodeur.

On propose de plus un procédé d'optimisation tel que précédemment décrit, dans lequel le boîtier décodeur comprend au moins deux haut-parleurs, la production des nouveaux paramètres audio comprenant l'étape d'ajuster une balance audio entre lesdits au moins deux haut-parleurs.

On propose de plus un procédé d'optimisation tel que précédemment décrit, dans lequel le boîtier décodeur comprend un premier haut-parleur et un deuxième haut-parleur, le procédé d'optimisation comprenant les étapes de :

- déterminer, en utilisant la matrice d'homographie planaire, un premier angle entre un axe de référence de l'image initiale passant par la position d'écoute optimale initiale, et un premier axe courant passant par la position d'écoute optimale initiale et le premier haut-parleur dans l'image courante, et un deuxième angle entre l'axe de référence et un deuxième axe courant passant par la position d'écoute optimale initiale et le deuxième haut-parleur dans l'image courante ;
- déterminer, en utilisant la matrice d'homographie planaire, une première distance entre la position d'écoute optimale initiale et le premier haut-parleur, et une deuxième distance entre la position d'écoute optimale initiale et le deuxième haut-parleur ;
- utiliser une méthode d'ambisonie pour placer des sources sonores virtuelles autour de la position d'écoute optimale initiale en calculant des gains qui dépendent du premier angle, du deuxième angle, de la première distance et de la deuxième distance, les nouveaux paramètres audio comprenant lesdits gains.

On propose de plus un procédé d'optimisation tel que précédemment décrit, le procédé d'optimisation utilisant, pour définir les nouveaux paramètres audio, une table de correspondance prédéfinie qui associe des paramètres audio précalculés à des indications de distance et/ou d'angle représentatifs du changement de position et/ou d'orientation du boîtier décodeur.

On propose de plus un procédé d'optimisation tel que précédemment décrit, comprenant les étapes, pour déterminer la nouvelle position du boîtier décodeur, de :

- détecter un angle particulier qui est le plus présent dans l'ensemble de coordonnées polaires comprenant les premières coordonnées polaires des premières lignes et les deuxièmes coordonnées polaires des deuxièmes lignes ;
- si un nombre de fois où ledit angle particulier est présent dans l'ensemble de coordonnées polaires est supérieur à un seuil d'angle prédéterminé, en déduire que le boîtier décodeur a possiblement subi un déplacement latéral perpendiculairement à un axe optique de la caméra ;
- estimer ledit déplacement latéral en fonction des distances des premières coordonnées polaires des premiers lignes et des deuxièmes coordonnées polaires deuxièmes lignes ayant pour angle l'angle particulier.

On propose de plus un procédé d'optimisation tel que précédemment décrit, dans lequel l'action corrective consiste à définir une nouvelle position d'écoute optimale associée à la nouvelle position et/ou à la nouvelle orientation du boîtier décodeur, et à indiquer à l'utilisateur la nouvelle position d'écoute optimale pour que celui-ci l'utilise.

On propose de plus un procédé d'optimisation tel que précédemment décrit, dans lequel l'action corrective consiste à émettre un message à destination d'un utilisateur du boîtier décodeur invitant celui-ci à repositionner le boîtier décodeur dans la position initiale et/ou dans l'orientation initiale.

On propose de plus un boîtier décodeur comprenant au moins un haut-parleur et auquel au moins une caméra est solidarisée, le boîtier décodeur comprenant en outre une unité de traitement dans laquelle est mise en œuvre le procédé d'optimisation tel que précédemment décrit.

On propose de plus un programme d'ordinateur comprenant des instructions qui conduisent l'unité de traitement du boîtier décodeur tel que précédemment décrit à exécuter les étapes du procédé d'optimisation tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en œuvre particuliers non limitatifs de l'invention.

BREVE DESCRIPTION DES DESSINS

Il sera fait référence aux dessins annexés parmi lesquels :

[Fig. 1] la figure 1 est une vue schématique et de dessus représentant un boîtier décodeur et un téléviseur de l'art antérieur, ainsi qu'un utilisateur assis sur un canapé ;
[Fig. 2] la figure 2 représente un téléviseur et un boîtier décodeur dans lequel est mise en œuvre l'invention ;
[Fig. 3] la figure 3 représente des étapes du procédé d'optimisation ;
[Fig. 4] la figure 4 représente une image initiale ;
[Fig. 5] la figure 5 représente le boîtier décodeur vu de dessus, ainsi qu'un repère de référence associé à la scène et un premier repère associé au boîtier décodeur ;

[Fig. 6] la figure 6 est une figure similaire à la figure 5, qui représente en outre le boîtier décodeur après son déplacement et un deuxième repère associé au boîtier décodeur ;

[Fig. 7] la figure 7 illustre un ajustement de balance audio ;

[Fig. 8] la figure 8 est une figure similaire à la figure 6, qui illustre la méthode ambisonique ;

[Fig. 9] la figure 9 est un graphique représentant une droite et ses coordonnées polaires ;

[Fig. 10] la figure 10 représente l'image initiale et des premières lignes détectées par la transformée de Hough.

## DESCRIPTION DETAILLEE DE L'INVENTION

En référence à la figure 1, l'invention est ici mise en œuvre dans un système comprenant un boîtier décodeur 11 et un téléviseur 12.

Le boîtier décodeur 11 est relié au téléviseur 12 par un câble HDMI 13.

Le boîtier décodeur 11 comprend ici deux haut-parleurs 14 comprenant un premier haut-parleur 14a et un deuxième haut-parleur 14b.

La membrane du premier haut-parleur 14a est située au niveau d'une face de gauche du boîtier décodeur 11. La membrane du deuxième haut-parleur 14b est située au niveau d'une face de droite du boîtier décodeur 11.

Le boîtier décodeur 11 comporte une unité audio 16 agencée pour acquérir un flux audio et pour produire des premiers signaux audio à destination du premier haut-parleur 14a, et des deuxièmes signaux audio à destination du deuxième haut-parleur 14b, de manière à restituer des signaux sonores correspondant au flux audio.

Le flux audio peut être un flux audio monocanal ou multicanal, peut éventuellement accompagner un flux vidéo, et peut être issu d'une source quelconque, qui est par exemple un réseau de diffusion (réseau de télévision par satellite, connexion Internet, réseau de télévision numérique terrestre (TNT), réseau de télévision par câble, etc.), un autre équipement connecté au boîtier décodeur 11 (un lecteur de CD, de DVD ou de BlueRay, un smartphone, une tablette, etc.), ou bien encore un support de stockage (et par exemple une clef USB ou une carte mémoire connectée au boîtier décodeur 11).

L'unité audio 16 comprend des composants *hardware* (matériels) et/ou logiciels. Ces composants comprennent notamment un ou des amplificateurs. Certain(s) de ces composants mettent en œuvre un module de traitement audio 17 capable d'appliquer et de modifier des paramètres audios pour régler le rendu acoustique des haut-parleurs 14a, 14b. Un jeu de paramètres audio forme un profil audio.

En particulier, le module de traitement audio 17 permet de répartir les canaux d'un flux audio multicanal entre les haut-parleurs 14 de façon à rendre l'effet de spatialisation pour l'utilisateur. Le module de traitement audio 17 peut adapter la répartition en fonction d'un paramètre de position de l'utilisateur et d'un angle définissant la largeur de la zone d'écoute optimale.

Le boîtier décodeur 11 comprend de plus une caméra 18.

La caméra 18 est positionnée au niveau d'une portion centrale et supérieure de la face avant 15 du boîtier décodeur 11.

Le boîtier décodeur 11 comprend un module de traitement d'image 19 agencé pour acquérir les images produites par la caméra 18 et pour appliquer des algorithmes de traitement du signal sur les images.

Le boîtier décodeur 11 comprend aussi un ou des microphones 20 agencés pour capturer des signaux sonores présents dans l'environnement du boîtier décodeur 11. Le boîtier décodeur 11 comprend de plus un module de traitement audio 21 agencé pour traiter et pour enregistrer lesdits signaux sonores capturés.

Le boîtier décodeur 11 comprend aussi une unité de traitement 22. L'unité de traitement 22 comprend au moins un composant de traitement 23 (électronique et/ou logiciel), qui est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). L'unité de traitement 22 comprend aussi une ou des mémoires 24 (et notamment une ou des mémoires non-volatiles), reliées à ou intégrées dans le composant de traitement 23. Au moins l'une de ces mémoires 24 forme un support d'enregistrement lisible par ordinateur, sur lequel est enregistré au moins un programme d'ordinateur comprenant des instructions qui conduisent le composant de traitement 23 à exécuter au moins certaines des étapes du procédé d'optimisation qui sera décrit plus bas.

L'invention consiste à comparer des images de la scène située en face du boîtier décodeur 11 et capturées à des moments temporels différents par la caméra 18. Cette comparaison a pour but de détecter (et éventuellement aussi d'évaluer) des déplacements de plusieurs objets de la scène et de déduire de ces déplacements un éventuel changement de position et/ou d'orientation du boîtier décodeur 11. Si un changement susceptible de dégrader le rendu sonore de l'utilisateur est détecté, une action corrective est effectuée.

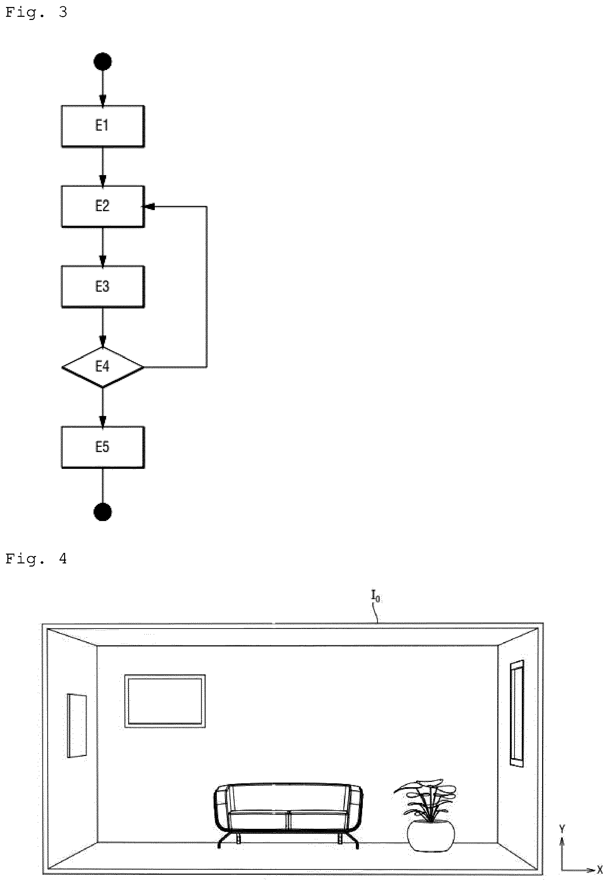

En référence à la figure 3, le procédé d'optimisation de la restitution sonore réalisée par le boîtier décodeur 11 comprend donc les étapes suivantes.

L'unité de traitement 22 acquiert au moins une image initiale $I_0$ produite par la caméra 18 alors que le boîtier décodeur 11 se trouve dans une position initiale et dans une orientation initiale : étape E1. L'image initiale $I_0$ est par exemple celle de la figure 4.

Puis, l'unité de traitement 22 acquiert au moins une image courante $I_n$ produite par la caméra 18 : étape E2.

L'unité de traitement 22 analyse alors l'image courante $I_n$ et l'image initiale $I_0$ pour détecter un changement de position et/ou d'orientation du boîtier décodeur 11 : étape E3.

L'unité de traitement 22 évalue alors ce changement de position et/ou d'orientation : étape E4. Si celui-ci n'est pas significatif et donc n'a pas d'impact sur le rendu acoustique, le procédé repasse à l'étape E2.

Si le changement de position et/ou d'orientation est significatif, l'unité de traitement 22 effectue au moins une action corrective ayant pour but d'optimiser la restitution sonore suite au changement de position et/ou d'orientation du boîtier décodeur 11 : étape E5.

On décrit maintenant, de manière plus détaillée, un premier mode de réalisation du procédé d'optimisation.

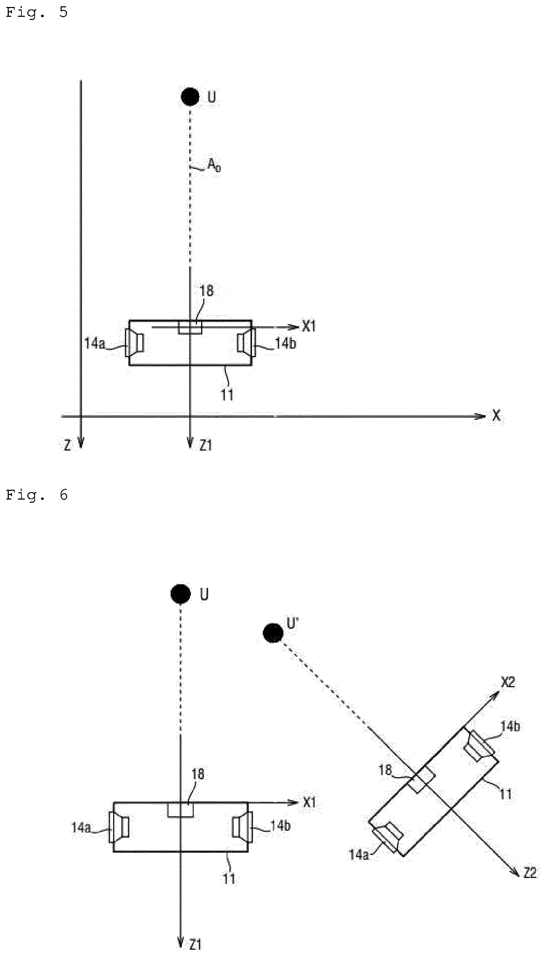

A l'étape E1, le boîtier décodeur 11 se trouve dans la position initiale et dans l'orientation initiale, qui sont des position et orientation nominales. En référence à la figure 5, le boîtier décodeur 11 est par exemple posé à plat, de sorte que sa face inférieure repose sur un support (un meuble TV par exemple). Le boîtier décodeur 11 est par exemple configuré de sorte que l'axe optique $A_o$ de la caméra 18 passe par une position de restitution optimale initiale U, qui est la position de l'utilisateur qui, lorsque le boîtier décodeur 11 se trouve dans la position initiale et dans l'orientation initiale, permet à l'utilisateur de profiter au mieux des qualités de restitution audio du boîtier décodeur 11.

On note que dans cette position et dans l'image initiale $I_0$, l'axe X1 et l'axe Z1 du premier repère $R_1$ associé au boîtier décodeur 11 sont parallèles respectivement à l'axe X et l'axe Y d'un repère de référence associé à la scène.

L'axe Z1 est en l'occurrence l'axe optique $A_o$ de la caméra 18 lorsque le boîtier décodeur 11 est dans la position initiale et l'orientation initiale.

L'unité de traitement 22 acquiert au moins une image initiale $I_0$. Optionnellement, un ou des traitements, et par exemple un filtrage de détection de bord et/ou une égalisation de couleurs, sont appliqués sur l'image initiale $I_0$ et permettent de la préparer pour la suite. Cette image $I_0$ est sauvegardée en mémoire non-volatile.

Le boîtier décodeur 11 a donc été calibré (par exemple en usine, ou bien manuellement par l'utilisateur à son premier démarrage) pour la position de restitution optimale initiale U.

On note $(u_x, u_y, u_z)$ les coordonnées de U dans le repère $R_1$ (X1,Y1,Z1). La position de U est donc connue.

Le résultat de cette calibration est que le boîtier décodeur 11, à partir de son démarrage suivant ladite calibration (c'est à partir de son premier démarrage chez l'utilisateur si la calibration a été réalisée en usine), utilise des paramètres audio initiaux pour optimiser la restitution sonore. Ces paramètres audio initiaux définissent un profil sonore par défaut. Cependant, ce réglage permet d'obtenir une restitution optimisée dans la position de restitution optimale initiale U uniquement lorsque le boîtier décodeur 11 se trouve dans la position initiale et dans l'orientation initiale.

A l'étape E2, l'unité de traitement 22 acquiert une ou des images courantes $I_n$ (avec $n \neq 0$), qui sont capturées après l'acquisition de l'image initiale $I_0$.

Dans un premier mode de réalisation, l'unité de traitement 22 acquiert une nouvelle capture de la scène (c'est-à-dire une nouvelle image courante $I_n$) à chaque démarrage du boîtier décodeur 11.

Dans un deuxième mode de réalisation, l'unité de traitement 22 acquiert une capture de la scène à intervalles réguliers, par exemple toutes les secondes, toutes les minutes ou toutes les 30 minutes.

Dans un troisième de mode de réalisation, l'unité de traitement 22 acquiert chaque jour une capture de la scène à une heure prédéfinie, par exemple à 12h00.

L'unité de traitement 22 peut valider la capture, et donc l'accepter, seulement si celle-ci répond à un ou des critères prédéfinis. Par exemple, une capture de la scène peut être considérée comme acceptée si la luminosité L de la scène est supérieure à un seuil de luminosité prédéterminé.

On définit par exemple que la capture est acceptée si :

$$L > 1000 \text{ lux.}$$

Cette information est généralement accessible directement sur le capteur embarqué dans la caméra 18.

A l'étape E3, l'unité de traitement 22 analyse la ou les images courantes $I_n$ et la ou les images initiales $I_0$ pour détecter un changement de position et/ou d'orientation du boîtier décodeur 11. Ce déplacement peut être par exemple défini uniquement par un angle de rotation autour de l'axe vertical - auquel cas le déplacement est un changement d'orientation du boîtier décodeur 11.

On considère par exemple que l'unité de traitement 22 analyse une seule image courante $I_n$ et une seule image initiale $I_0$.

Dans un premier mode de réalisation, l'analyse de l'image courante $I_n$ et de l'image initiale $I_0$ consiste à déterminer une matrice d'homographie planaire permettant de passer de l'image courante $I_n$ à l'image initiale $I_0$, puis à analyser ladite matrice d'homographie planaire pour détecter le changement de position et/ou d'orientation du boîtier décodeur 11.

La technique de transformation homographique planaire permet de trouver les coordonnées d'un point d'un plan d'une scène en trois dimensions à partir du même point dans un autre plan de cette même scène.

Dans l'article intitulé Creating Full View Panoramic Image Mosaics and Environment Maps, Richard Szeliski and Heung-Yeung Shum, qui fait partie de l'ouvrage « SIGGRAPH '97: Proceedings of the 24th annual conference on Computer graphics and interactive techniques »,ISBN 978-0-89791-896-1, paru le 3 août 1997, aux pages 251-258, et qui traite de la transformation d'images pour l'obtention d'un panorama, il est décrit la matrice de transformation M à 8 coefficients $(m_0...m_7)$ permettant de passer d'une image 1 à une image 2, chacune étant une photographie d'une même scène à différents points de vue. La matrice M est une matrice d'homographie planaire.

On note que la matrice M peut être décomposée selon la méthode décrite dans le document *Decomposition of Homogenous 4x4 Matrices, Rammi (rammi@ caff.de), April 14, 2020.*

Cette décomposition permet d'exprimer la matrice M de la manière suivante :

$$M = P * T * R * H * S$$

où P est une matrice de projection, T est une matrice de translation, R est une matrice de rotation, H est une matrice de cisaillement et S est une matrice de mise à l'échelle.

Pour un point P1(x, y ,1) et P2(x',y',1) de coordonnées homogène, la matrice M s'écrit :

$$P_2 \sim M \times P_1 = \begin{bmatrix} m_0 & m_1 & m_2 \\ m_3 & m_4 & m_5 \\ m_6 & m_7 & 1 \end{bmatrix} \times \begin{bmatrix} x \\ y \\ 1 \end{bmatrix}$$

Les équations de (x', y') sont données par :

$$x' = \frac{m_0 x + m_1 y + m_2}{m_6 x + m_7 y + 1}$$

$$y' = \frac{m_3 x + m_4 y + m_5}{m_6 x + m_7 y + 1}$$

Si les coefficients :

- $m_0$ et $m_4$ valent 1 ;
- $m_1, m_2, m_3, m_6$ et $m_7$ valent 0 ;

alors la matrice M est un matrice identité : aucun mouvement n'a donc été détecté.

Dans le cas contraire, où M n'est pas une matrice identité, un déplacement a été détecté.

Pour réaliser l'analyse de la matrice d'homographie planaire M, l'unité de traitement 22 compare donc ladite matrice d'homographie planaire M avec une matrice d'identité.

L'unité de traitement 22 ne détecte pas de changement de position ni d'orientation du boîtier décodeur 11 lorsqu'une valeur absolue d'une différence entre chaque élément de la matrice d'homographie planaire M et un élément correspondant de la matrice d'identité est inférieure à un premier seuil de détection prédéterminé. L'unité de traitement 22 détecte un changement de position et/ou d'orientation du boîtier décodeur 11 dans le cas contraire.

En effet, des déplacements trop petits du boîtier décodeur 11, et/ou des objets dans l'environnement, n'auront pas d'impact réel sur la qualité de la restitution sonore. L'unité de traitement 22 ajoute donc une marge d'erreur sur la détection d'une matrice d'identité.

Ici, les premiers seuils de détection prédéterminés sont égaux pour tous les éléments de la matrice M et sont par exemple égaux à 1%.

L'unité de traitement 22 ne détecte donc pas de changement de position ni d'orientation du boîtier décodeur 11 lorsque :

$$m_0 = 1 \pm 0,01$$

$$m_4 = 1 \pm 0,01$$

$$m_1 = 0 \pm 0{,}01$$

$$m_2 = 0 \pm 0{,}01$$

$$m_6 = 0 \pm 0{,}01$$

$$m_7 = 0 \pm 0{,}01$$

En référence à la figure 6, la nouvelle position d'écoute optimale devient U'.

Appliquer un déplacement dans le référentiel de la scène, revient à déplacer la position audio optimale dans le référentiel de la caméra 18.

Dans le deuxième repère $R_2$ (X2, Y2, Z2), associé au boîtier décodeur 11 après son déplacement, le point U ($u_x$, $u_y$, $u_z$), c'est-à-dire la position d'écoute optimale initiale, a pour coordonnées celles du point U' ($u'_x$, $u'_y$, $u'_z$) transformées par la matrice M.

On a donc, dans $R_2$ : $U \sim M \times U'$

$$u_x = \frac{m_0 u'_x + m_1 u'_y + m_2}{m_6 u'_x + m_7 u'_y + 1}$$

$$u_y = \frac{m_3 u'_x + m_4 u'_y + m_5}{m_6 u'_x + m_7 u'_y + 1}$$

La nouvelle position optimale d'écoute devient U'.

Suite à l'étape E4, si le déplacement subi par le boîtier décodeur 11 est significatif, l'unité de traitement 22 effectue à l'étape E5 au moins une action corrective ayant pour but d'optimiser la restitution sonore suite au changement de position et/ou d'orientation du boîtier décodeur 11.

Dans un premier mode de réalisation, si le changement de position et/ou d'orientation du boîtier décodeur 11 est détecté car considéré comme significatif, l'unité de traitement 22 émet un message à destination de l'utilisateur du boîtier décodeur 11 invitant celui-ci repositionne le boîtier décodeur 11 dans la position initiale et/ou dans l'orientation initiale. L'action corrective consiste donc à émettre ce message d'alerte.

L'utilisateur est averti par exemple par un message sur l'écran du téléviseur 12, par un signal sonore ou par un signal lumineux provenant par exemple d'une diode électroluminescente intégrée au boîtier décodeur 11, ou bien par un message envoyé par des moyens radios quelconques. Ce message invite l'utilisateur à remettre le boîtier décodeur 11 dans la position initiale et/ou dans l'orientation initiale.

Dans un deuxième mode de réalisation, l'unité de traitement 22 définit une nouvelle position d'écoute optimale associée à la nouvelle position et/ou à la nouvelle orientation du boîtier décodeur 11. La nouvelle position d'écoute optimale est donc la position U' sur la figure 6.

L'unité de traitement 22 indique à l'utilisateur du boîtier décodeur 11 la nouvelle position d'écoute optimale U' pour que celui-ci l'utilise.

L'action corrective consiste donc à définir la nouvelle position d'écoute optimale, et à indiquer cette nouvelle position d'écoute optimale à l'utilisateur.

Dans un troisième mode de réalisation, l'unité de traitement 22 détermine la nouvelle position et/ou la nouvelle orientation du boîtier décodeur 11, et produit de nouveaux paramètres audio pour optimiser la restitution sonore alors que le boîtier décodeur 11 se trouve dans la nouvelle position et/ou la nouvelle orientation.

La génération des nouveaux paramètres audio peut être réalisée à l'initiative de l'utilisateur. L'unité de traitement 22 propose à l'utilisateur de déclencher à son initiative une calibration du profil audio par ajustement automatique des paramètres.

Alternativement, l'unité de traitement 22 effectue cet ajustement automatiquement en tâche de fond, sans intervention de l'utilisateur.

Avant de réaliser l'ajustement, l'unité de traitement 22 vérifie un critère de fiabilité sur la détection de la nouvelle position et/ou de la nouvelle orientation du boîtier décodeur 11.

Le critère de fiabilité est que la valeur de l'erreur, calculée à l'équation (13) du document précédemment cité (*Creating Full View Panoramic Image Mosaics and Environment Maps, Richard Szeliski and Heung-Yeung Shum*), est inférieure (par exemple inférieure ou égale) à un seuil de fiabilité prédéfini.

L'erreur est donnée par :

$$e = \frac{\sum_i \big(L1(x'i) - L0(xi)\big)^2}{width \times height}$$

Cette formule utilise L0 et L1, qui sont les intensités normalisées (entre 0 et 1) de l'image de référence, respectivement la nouvelle image capturée.

Puis est calculée la somme des différences au carré de chaque Intensité de pixel « i ».

Il faut enfin diviser ce résultat par le nombre total de pixels.

Cela donne l'erreur d'intensité globale normalisée entre 0 et 1.

On a, si :

- $e$ est proche de 0 : les images sont très corrélées,
- $e$ est proche de 1 : les images ont très peu de points communs.

En effet, si l'image initiale $I_0$ et l'image courante $I_n$ sont complètement décorrélées, donc sans point commun, l'unité de traitement 22 ne peut pas estimer de manière fiable les coordonnées $u_x$, $u_y$ du point U dans le repère $R_2$.

Le seuil de fiabilité prédéfini est par exemple égal à 40%.

L'unité de traitement 22 considère que l'image initiale $I_0$ et l'image courante $I_n$ ne sont pas suffisamment proches si l'erreur est supérieure au seuil de fiabilité prédéfini de 40% par exemple, ce qui peut se traduire par le fait que l'image initiale I0 et l'image courante $I_n$ se chevauchent à 60 %.

Dans ce cas, l'unité de traitement 22 n'ajuste pas les paramètres audio mais avertit uniquement l'utilisateur du déplacement.

Si le critère de fiabilité est vérifié, l'unité de traitement 22 ajuste les paramètres audio de sorte que la restitution sonore est à nouveau optimisée dans la position d'écoute optimale initiale U.

L'action corrective consiste donc à ajuster les paramètres audio de sorte que la restitution sonore est à nouveau optimisée dans la position d'écoute optimale initiale U. L'ajustement automatique des paramètres audio en fonction du déplacement du boîtier décodeur 11 peut se faire de plusieurs manières.

Les nouveaux paramètres audio peuvent comprendre un gain appliqué sur un volume courant, qui dépend de la position d'écoute optimale initiale U et de la nouvelle position et/ou de la nouvelle orientation du boîtier décodeur 11.

Cette solution est particulièrement adaptée dans le cas où le boîtier décodeur 11 ne comprend qu'un seul haut-parleur (système monocanal).

L'unité de traitement 22 ajuste le volume du haut-parleur en appliquant par exemple un gain sur le volume courant qui est proportionnel à l'éloignement de la position d'écoute optimale initiale U par rapport l'axe optique $A_o$ de la caméra 18 (cet éloignement est égal à la distance séparant U de son projeté orthogonal sur $A_o$) ou bien par rapport à l'abscisse du nouveau point d'écoute optimal U'.

On peut utiliser la matrice de translation T et/ou la matrice de rotation R pour calculer les distances [OU] et [OU'] (O étant l'origine du deuxième repère), et faire le rapport entre les deux distances pour obtenir un facteur à appliquer sur le volume courant du haut-parleur.

Optionnellement ce gain peut être limité, de sorte que le volume courant total (égal à la somme du volume courant actuel et du gain), ne dépasse pas un volume maximum autorisé. Ce plafond de volume peut être réglé par l'utilisateur ou bien être nivelé automatiquement selon le volume courant de la pièce capté par les microphones 20 du boîtier décodeur 11.

L'unité de traitement 22, pour produire les nouveaux paramètres audio, peut aussi ajuster une balance audio entre le premier haut-parleur 14a et le deuxième haut-parleur 14b. Cette solution nécessite donc au moins deux haut-parleurs (système stéréo).

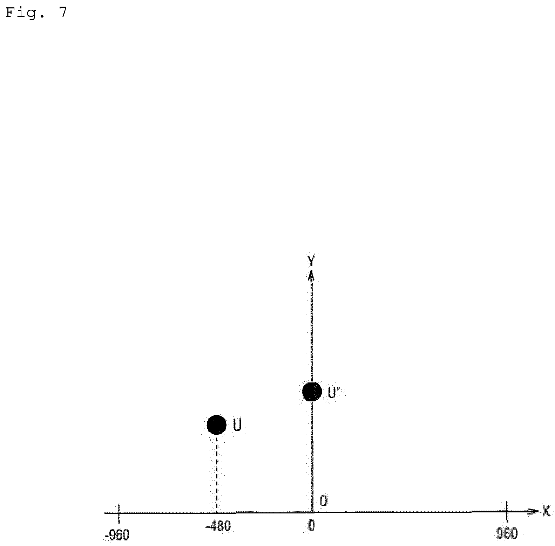

En référence à la figure 7, qui représente le plan (XY) de la caméra 18, l'unité de traitement 22 ajuste les balances du son entre le premier haut-parleur 14a et le deuxième haut-parleur 14b, et donc génère des signaux sonores avec plus d'amplitude sonore à gauche ou à droite. L'image de la figure 7 est une image HD avec 1920 pixels en largeur et 1080 pixels en hauteur. L'axe optique $A_o$ (dans la nouvelle position) est au centre et a pour coordonnées (0,0) dans le plan (XY).

L'unité de traitement 22 ajuste les balances en fonction de la position de U dans l'image courante $I_n$ et, plus précisément, en fonction de la position de U par rapport à l'axe OY.

Sur la figure 7, on voit que le point U a pour coordonnées -480 pixels à gauche de l'axe OY. L'unité de traitement 22 augmente donc le volume du deuxième haut-parleur 14b (situé à droite) pour tenir compte de l'éloignement du deuxième haut-parleur 14b par rapport à la zone d'écoute optimale.

L'augmentation du volume dépend ici de l'éloignement du point U par rapport à l'axe OY. Ici, par exemple, l'unité de traitement 22 augmente le volume du haut-parleur le plus éloigné de U, d'un ratio égal au rapport entre la distance entre U et l'axe OY et la longueur de la demi-image définie du côté de l'axe OY où est positionné le point U.

Ici, le point U est situé à la moitié (50%) de la demi-image courante située à gauche de l'axe OY, et l'unité de traitement 22 augmente de 50 % le volume du deuxième haut-parleur 14b.

Dans un système multicanal (deux haut-parleurs ou plus), l'unité de traitement 22 peut utiliser une technique de spatialisation dite « ambisonique ».

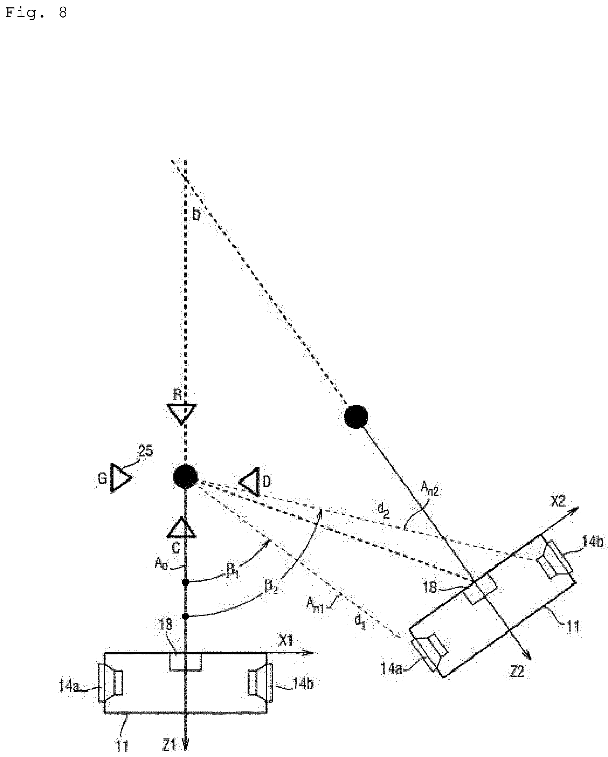

En référence à la figure 8, cette méthode permet de placer des sources sonores virtuelles autour d'un auditeur en calculant des gains $G_{ij}$ pour chaque haut-parleur i et chaque source j en fonction de la position de l'auditeur par rapport aux haut-parleurs, et de la position souhaitée pour la source virtuelle. On note que les gains $G_{ij}$ sont des valeurs complexes, qui représentent donc la combinaison d'une amplification (ou d'une atténuation) et d'un déphasage.

Selon ce mode de réalisation, on considère que les sources virtuelles ne changent pas de position après le déplacement du boîtier décodeur 11.

L'unité de traitement 22 détermine tout d'abord, en utilisant la matrice d'homographie planaire M, un premier angle $\beta_1$ entre un axe de référence de l'image initiale $I_0$ passant par la position d'écoute optimale initiale U, et un premier axe courant $A_{n1}$ passant par la position d'écoute optimale initiale U et le premier haut-parleur 14a dans l'image courante $I_n$, et un deuxième angle $\beta_2$ entre l'axe de référence et un deuxième axe courant $A_{n2}$ passant par la position d'écoute optimale initiale U et le deuxième haut-parleur 14b dans l'image courante $I_n$.

L'axe de référence est ici l'axe optique $A_o$ de la caméra 18, qui passe par la position d'écoute optimale initiale U et par la position de la caméra 18 sur le boîtier décodeur 11 lorsque celui-ci se trouve dans la position initiale et dans l'orientation initiale.

L'unité de traitement 22 détermine aussi, en utilisant la matrice d'homographie planaire M, une première distance $d_1$ entre la position d'écoute optimale initiale U et le premier haut-parleur 14a, et une deuxième distance $d_2$ entre la position d'écoute optimale initiale U et le deuxième haut-parleur 14b.

L'unité de traitement 22 utilise la méthode d'ambisonie pour placer des sources sonores virtuelles 25 autour de la position d'écoute optimale initiale U en calculant des gains qui dépendent du premier angle $\beta_1$, du deuxième angle $\beta_2$, de la première distance $d_1$ et de la deuxième distance $d_2$, les nouveaux paramètres audio comprenant lesdits gains.

La méthode d'ambisonie nécessite donc de déterminer les valeurs $(d_1, \beta_1)$ et $(d_2, \beta_2)$, $d_1$ étant la première distance, $\beta_1$ étant le premier angle, $d_2$ étant la deuxième distance et $\beta_2$ étant le deuxième angle.

Cette méthode nécessite de définir la position initiale et l'orientation initiale du boîtier décodeur 11 dans le repère initial (avant son déplacement).

Sur la figure 8, l'angle de rotation b est obtenu après décomposition de la matrice M. La distance et l'angle $(d_1, \beta_1)$ entre le point U et le premier haut-parleur 14a, et la distance et l'angle $(d_2, \beta_2)$ entre le point U et le deuxième haut-parleur 14b, sont obtenus après avoir déterminé la position du boîtier décodeur 11 dans le repère (X1,Z1).

L'unité de traitement 22 est ainsi capable, en utilisant la méthode d'ambisonie, de trouver les gains à appliquer sur chaque haut-parleur 14a, 14b pour reconstituer quatre sources virtuelles 25 : la source C positionnée au centre devant l'utilisateur, la source G à gauche, la source D à droite et la source R derrière l'utilisateur.

On note que sur la figure 8, les haut-parleurs 14 ne sont pas à une distance égale de l'utilisateur ce qui peux poser problème pour la méthode d'ambisonie. Pour résoudre ce problème, on calcule pour chaque haut-parleur 14 un gain $G_{ij}(d)$ pour des valeurs de distance d variant entre la première distance $d_1$ et la deuxième distance $d_2$, et on applique ensuite la moyenne de ces valeurs $\underline{G_{ij}}$ :

$\underline{G_{LC}}$ x C + $\underline{G_{LD}}$ x D + $\underline{G_{LG}}$ x G + $\underline{G_{LR}}$ x R sur le premier haut-parleur 14a (de gauche) ;
$\underline{G_{RC}}$ x C + $\underline{G_{RD}}$ x D + $\underline{G_{RG}}$ x G + $\underline{G_{RR}}$ x R sur le deuxième haut-parleur 14b (de droite).

Ici, C, D, G et R représentent les signaux audio émis par les sources virtuelles respectives.

Pour définir les nouveaux paramètres audio, l'unité de traitement 22 peut utiliser une table de correspondance prédéfinie 26 qui associe des paramètres audio précalculés à des indications de distance et/ou d'angle représentatifs du changement de position et/ou d'orientation du boîtier décodeur 11. Cette table de correspondance prédéfinie 26 est par exemple stockée dans l'une des mémoires non-volatiles.

La table de correspondance prédéfinie 26 comprend par exemple une pluralité de triplets de valeurs $(\Delta_x, \Delta_z \Delta_\theta)$ et des paramètres $G_{i,j}$, chaque triplet de valeurs $(\Delta_x, \Delta_z, \Delta_\theta)$ étant associé à un ensemble de valeurs de gains $G_{i,j}$.

$(\Delta_x, \Delta_z)$ représente un pas en unité de distance dans le repère (X1, Z1), égal à 50cm par exemple (cette valeur correspond à une distance avant projection de la matrice P).

$\Delta\theta$ représente un pas d'angle autour de l'axe Y, égal à 15° par exemple (cette valeur est issue de la matrice de rotation R).

On décrit maintenant un deuxième mode de réalisation du procédé d'optimisation de restitution sonore.

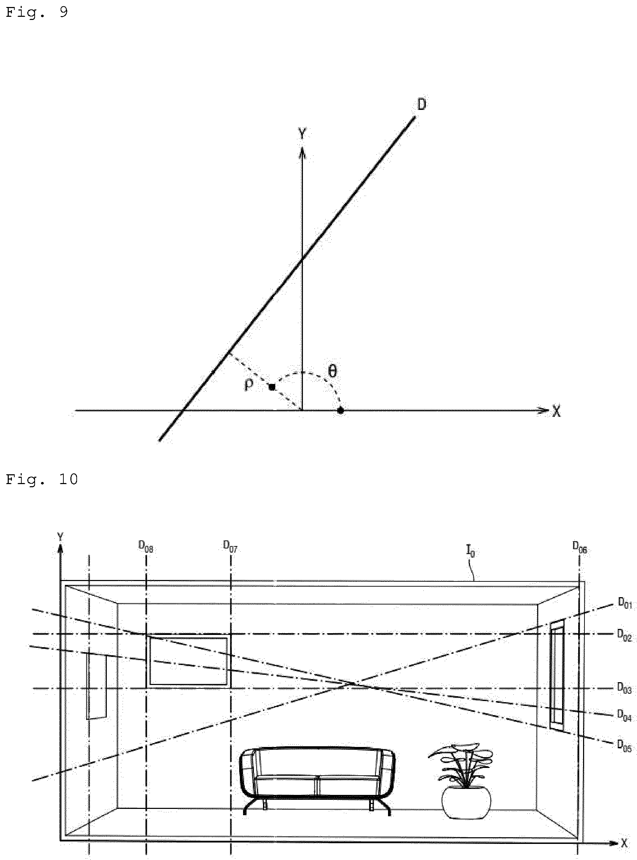

Ce mode de réalisation utilise un algorithme de détection de lignes formées par les objets de la scène photographiée par la caméra 18. En référence à la figure 9, la sortie de la transformée de Hough permet d'obtenir une famille de droites, chaque droite D ayant des coordonnées polaires $(\rho,\theta)$ dans le plan (XY) de la caméra 18. L'origine est la position de la caméra 18.

On se réfère de nouveau à la figure 3 (procédé).

A l'étape E1, l'unité de traitement 22 acquiert l'image initiale $I_0$.

A l'étape E2, l'unité de traitement 22 acquiert l'image courante $I_n$.

A l'étape E3, et en référence à la figure 10, l'unité de traitement 22 détecte dans l'image initiale $I_0$, en utilisant une transformée de Hough, un premier nombre de premières lignes $D_{0i}$ ayant chacune des premières coordonnées polaires (i varie de 1 à 8 sur la figure 10).

Les coordonnées polaires de chaque première ligne $D_{0i}$ sont sauvegardées dans une première base de données $B_0$ stockée par exemple dans l'une des mémoires non-volatiles (afin d'être restituées ultérieurement). Par exemple, si une droite $D_{01}$ est définie par les coordonnées $(\rho_{01},\theta_{01})$, la première base de données $B_0$ comprendra l'association :
$D_{01} : (\rho_{01}, \theta_{01})$

Plus généralement, pour chaque droite $D_{0i}$ de l'image $I_0$, la base de données comprendra l'association :
$D_{0i} : (\rho_{0i}, \theta_{0i})$

Optionnellement, seules les droites à orientation verticale peuvent être considérées, et par exemple celles dont l'angle $\theta$ est compris dans un intervalle prédéfini, qui est par exemple l'intervalle $\left[0; \dfrac{\pi}{4}\right]$ ou $\left[\dfrac{3\pi}{4}; \pi\right]$.

L'unité de traitement 22 ne détecte ainsi que les translations sur l'axe des abscisses et les rotations autour de l'axe des ordonnées. On simplifie de la sorte les calculs sans dégrader la détection, car cet intervalle correspond à la majorité des cas d'utilisation. En effet, on peut considérer que le boîtier décodeur 11 est lui-même aligné horizontalement et positionné sur une surface plane.

Puis, l'unité de traitement 22 détecte dans l'image courante $I_n$, en utilisant la transformée de Hough, un deuxième nombre de deuxièmes lignes ayant chacune des deuxièmes coordonnées polaires.

L'unité de traitement 22 applique pour chaque image courante $I_n$ le même algorithme que celui décrit pour l'image initiale $I_0$.

L'unité de traitement 22 produit ainsi une deuxième base de données $B_1$, formée par des droites :
$D_{1i} : (\rho_{1i}, \theta_{1i})$ .

L'unité de traitement 22 évalue alors un nombre de lignes communes à l'image initiale $I_0$ et à l'image courante $I_n$.

La comparaison entre l'image initiale $I_0$ et l'image courante $I_n$ se fait en comptant le nombre de lignes qui sont communes aux deux images en utilisant l'algorithme qui suit.

Ici :

- N est le premier nombre des premières lignes dans la première base de données $B_0$ ;
- M est le deuxième nombre des deuxièmes lignes dans la deuxième base de données $B_1$ ;
- L est le nombre de lignes comptées comme identiques entre les premières lignes de la première base de données $B_0$ et les deuxièmes lignes de la deuxième base de données $B_1$.

L'algorithme est le suivant :

```
1 L = 0
2 pour k de 0 à M − 1
3     pour r de 0 à N − 1
4         si (rho_b0[r] = rho_b1[k] et theta_b0[r] =
theta_b1[k]) alors
5             L = L + 1
6         fin si
7     fin pour
8 fin pour
```

L'unité de traitement 22 détecte un changement de position et/ou d'orientation du boîtier décodeur 11 si le rapport du nombre de lignes communes et du nombre total de lignes est inférieur à un seuil de détection prédéterminé.

Le seuil de détection prédéterminé est par exemple égal à 70 % : le boîtier décodeur 11 est considéré comme ayant subi un déplacement si L / Lmax, avec Lmax = min(N,M), est inférieur à 0,7. L'étape E5 peut alors être déclenchée. Dans le cas contraire, le procédé retourne à l'étape E2. La deuxième base de données $B_1$ peut alors être remise à zéro, et un nouveau cycle recommence.

On note qu'optionnellement, une tolérance T ($T_\rho$, $T_\theta$) peut être introduite pour les coordonnées des droites afin d'éviter de détecter des déplacements du boîtier décodeur 11 trop petits et donc n'ayant pas de réel impact sur le rendu audio. Chaque test d'égalité en ligne 4 ci-dessus deviendrait par exemple :

```
4          si (rho_b0[r] >= (rho_b1[k] - T_rho) et rho_b0[r]
   <= (rho_b1[k]+ T_rho) et
           theta_b0[r]   >=   (theta_b1[k]-  T_theta)   et
       theta_b0[r] <= (theta_b1[k] + T_theta)) alors
   5              L = L + 1
   6          fin si
```

Le couple de valeurs ($T_\rho$, $T_\theta$) peut être :

- un couple de valeurs fixes : par exemple 50 pixels pour $T_\rho$, 1 degré pour $T_\theta$ ;
- ou bien un pourcentage de la taille totale de la largeur ou hauteur de l'image, par exemple 5% de la taille de l'image $I_n$ :

$$T_\rho = 5 \times \frac{largeur\ I_n}{100 \times cos\theta} \quad \text{ou} \quad T_\rho = 5 \times \frac{hauteur\ I_n}{100 \times sin\theta}$$

Il peut arriver que L ne soit pas représentatif car il manque des repères dans l'image $I_0$ ou $I_n$ permettant de calculer suffisamment de droites.

**L'unité** de traitement 22 calcule donc un indice de confiance permettant d'estimer une confiance dans le résultat de la détection, puis compare l'indice de confiance avec un seuil de confiance prédéterminé. L'unité de traitement 22 décide alors, en fonction du résultat de ladite comparaison, de valider ou non le résultat de l'étape de détection du changement de position et/ou d'orientation.

L'indice de confiance dépend ici du premier nombre N et du deuxième nombre **M.**

L'indice de confiance est ici :

$$F = \frac{|N - M|}{N + M}$$

F est donc la différence normalisée entre le premier nombre et le deuxième nombre.

Plus F tend vers 0, plus la détection sera fiable.

L'unité de traitement 22 considère que le résultat de l'étape de détection est fiable uniquement si :

$$F < U,$$

où U est le seuil de confiance prédéterminé.

On fixe par exemple : U = 0,2.

Le déplacement du boîtier décodeur 11 est donc représentatif du nombre de lignes L comptabilisées comme identiques.

L'unité de traitement 22 utilise cet indice de confiance uniquement si $N > 2$ et M > 2. Si l'un de ces nombres est inférieur ou égal à 1, l'unité de traitement 22 considère que la détection n'est pas fiable sans même calculer la valeur de F.

Si l'unité de traitement 22 ne valide pas l'étape de détection du changement de position et/ou d'orientation, l'unité de traitement 22 acquiert une nouvelle image courante et réitère les étapes qui viennent d'être décrites.

L'utilisation de la transformée de Hough permet aussi de procéder à un calcul du déplacement effectif du boîtier décodeur 11.

L'unité de traitement 22 compare la première base de données $B_0$ et la deuxième base de données $B_1$. Pour toutes les lignes présentes dans la première base de données $B_0$ et la deuxième base de données $B_1$, l'unité de traitement 22 compte le nombre d'angles θ identiques quelles que soient les distances ρ (normales). On considère deux angles identiques si leur tangente sont identiques ou proche à 0,001 près par exemple. L'unité de traitement 22 détecte un angle particulier qui est le plus présent dans l'ensemble de coordonnées polaires comprenant les premières coordonnées polaires des premières lignes (première base de données $B_0$) et les deuxièmes coordonnées polaires des deuxièmes lignes (deuxième base de données $B_1$).

On nomme $θ_{max}$ l'angle particulier le plus représenté dans la première base de données $B_0$ et la deuxième base de données $B_1$.

Si le nombre de fois, où ledit angle particulier est présent dans l'ensemble de coordonnées polaires, est supérieur à un seuil d'angle prédéterminé, l'unité de traitement 22 en déduit que le boîtier décodeur 11 a subi un déplacement latéral perpendiculairement à l'axe optique $A_o$ de la caméra 18. Plus précisément, si le nombre d'occurrences de lignes orientées de $θ_{max}$ est supérieur au seuil d'angle prédéterminé, par exemple égal à 80 % du nombre total d'angles différents référencés dans les deux bases $B_0$, $B_1$, l'unité de traitement 22 en déduit que le boîtier décodeur 11 a été translaté sur plan horizontal de l'axe optique $A_o$ de la caméra 18.

L'unité de traitement 22 estime alors ledit déplacement latéral en fonction des distances des premières coordonnées polaires des premiers lignes et des deuxièmes coordonnées polaires deuxièmes lignes ayant pour angle l'angle particulier.

Pour l'ensemble des droites $\{D_{0i}, D_{1i}\}$ pour lesquelles l'angle est identique et le plus représenté (angle égal à $θ_{max}$), le déplacement moyen latéral en pixels est alors représenté sous la forme :

$$D_{moy}(θ) = \frac{(\sum_{i=0}^{M-1} ρ_{1i}(θ)) - (\sum_{i=0}^{N-1} ρ_{0i}(θ))}{N + M}$$

Si $D_{moy} > 0$, l'unité de traitement 22 en déduit que le déplacement du boîtier décodeur 11 s'est fait vers la gauche par rapport à sa position initiale dans la scène S.

Si $D_{moy} < 0$, l'unité de traitement 22 en déduit que le déplacement du boîtier décodeur 11 s'est fait vers la droite par rapport à sa position initiale dans la scène S.

Si $D_{moy} ≈ 0$, l'unité de traitement 22 en déduit que le boîtier décodeur 22 n'a pas été déplacé latéralement

L'unité de traitement 22 détecte ainsi que le boîtier décodeur 11 a été déplacé. L'action corrective consiste alors à émettre le message d'alerte pour prévenir l'utilisateur du mouvement.

On note que, une fois que l'analyse de l'image courante et de l'image initiale a permis de détecter un changement de position et/ou d'orientation du boîtier décodeur 11, et une fois que l'action corrective a été réalisée, un nouveau cycle débute, pour détecter un changement ultérieur de position et/ou d'orientation.

Le procédé d'optimisation recommence.

L'image courante $I_n$ devient la nouvelle image initiale $I_0$, et les nouveaux paramètres audio deviennent les paramètres audio initiaux. Le boîtier décodeur acquiert au moins une nouvelle image courante, puis analyse la nouvelle image courante et la nouvelle image initiale pour détecter le changement ultérieur de position et/ou d'orientation du boîtier décodeur.

Bien entendu, l'invention n'est pas limitée aux modes de réalisation décrits mais englobe toute variante entrant dans le champ de l'invention tel que défini par les revendications.

Les différentes étapes du procédé d'optimisation ne sont pas nécessairement toutes mises en œuvre dans le boîtier décodeur. Toutes ou certaine(s) de ces étapes pourraient être mises en œuvre dans un ou plusieurs équipements différents, et par exemple à distance, sur le *cloud*.

Bien que l'on ait indiqué ici que la caméra est positionnée au niveau d'une portion centrale et supérieure de la face avant du boîtier décodeur, cette configuration n'est pas limitative. La caméra pourrait être excentrée. De même, la forme du boîtier décodeur peut être quelconque. Le boîtier décodeur pourrait avoir une forme géométrique asymétrique, ou bien encore circulaire ou sphérique.

La caméra n'est pas nécessairement intégrée dans le boîtier décodeur mais doit être solidarisée à celui-ci (c'est-à-dire qu'elle subit les mêmes déplacements) ; elle pourrait par exemple être montée sur un support fixé sur la face supérieure du boîtier décodeur.

On a décrit ici un boîtier décodeur comprenant deux haut-parleurs situés sur les côtés de celui-ci. L'invention s'applique bien sûr à des configurations différentes, et par exemple à des boîtier décodeurs comprenant un seul haut-parleur, ou bien à des boîtier décodeurs comprenant quatre haut-parleurs, parmi lesquels on trouve un haut-parleur basses fréquences dont la membrane débouche au niveau d'une face inférieure ou supérieure du boîtier décodeur. On note que, dans la configuration où le boîtier décodeur intègre un tel haut-parleur basses fréquences, celui-ci n'est pas concerné par l'ajustement de la balance et, plus généralement, des paramètres audio.

**Revendications**

1.  Procédé d'optimisation d'une restitution sonore réalisée par un boîtier décodeur (11) relié à un téléviseur et qui comprend au moins un haut-parleur (14a, 14b) et auquel au moins une caméra (18) est solidarisée, comprenant les étapes de :

    - acquérir au moins une image initiale ($I_0$) produite par la caméra (18) alors que le boîtier décodeur (11) se trouve dans une position initiale et dans une orientation initiale, le boîtier décodeur (11) utilisant alors des paramètres audio initiaux pour optimiser la restitution sonore ;
    - puis, acquérir au moins une image courante produite par la caméra (18) ;
    - analyser la au moins une image courante et la au moins une image initiale pour détecter un changement de position et/ou d'orientation du boîtier décodeur (11) ;
    - effectuer au moins une action corrective permettant d'optimiser la restitution sonore suite au changement de position et/ou d'orientation du boîtier décodeur (11), l'action corrective comprenant les étapes de :

        ◦ déterminer une nouvelle position et/ou une nouvelle orientation du boîtier décodeur (11) en déterminant, dans un repère lié à la au moins une image courante, des coordonnées d'une position d'écoute optimale initiale (U) dans laquelle la restitution sonore était optimisée alors que le boîtier décodeur (11) se trouvait dans la position initiale et l'orientation initiale ;
        ◦ produire de nouveaux paramètres audio pour optimiser la restitution sonore alors que le boîtier décodeur se trouve dans la nouvelle position et/ou la nouvelle orientation, de sorte que la restitution sonore est à nouveau optimisée dans la position d'écoute optimale initiale (U).

2.  Procédé d'optimisation selon la revendication 1, dans lequel l'analyse de la au moins une image courante et de la au moins une image initiale comprend les étapes de :

    - déterminer une matrice d'homographie planaire permettant de passer de la au moins une image courante à la au moins un image initiale ;
    - analyser ladite matrice d'homographie planaire pour détecter le changement de position et/ou d'orientation du boîtier décodeur (11).

3.  Procédé d'optimisation selon la revendication 2, dans lequel l'analyse de la matrice d'homographie planaire comprend les étapes de :

    - comparer ladite matrice d'homographie planaire avec une matrice d'identité ;
    - ne pas détecter de changement de position ni d'orientation du boîtier décodeur (11) lorsqu'une valeur absolue d'une différence entre chaque élément de la matrice d'homographie planaire et un élément correspondant de la matrice d'identité est inférieure à un premier seuil de détection prédéterminé ;
    - détecter un changement de position et/ou d'orientation du boîtier décodeur (11) dans le cas contraire.

4.  Procédé d'optimisation selon la revendication 1, dans lequel l'analyse de la au moins une image courante et de la au moins une image initiale ($I_0$) comprend les étapes de :

    - détecter dans la au moins une image initiale ($I_0$), en utilisant une transformée de Hough, un premier nombre de premières lignes ($D_{0i}$) ayant chacune des premières coordonnées polaires ($\rho$, $\theta$) ;
    - détecter dans la au moins une image courante, en utilisant la transformée de Hough, un deuxième nombre de deuxièmes lignes ayant chacune des deuxièmes coordonnées polaires ;
    - évaluer un nombre de lignes communes à la au moins une image initiale et à la au moins une image courante ;
    - détecter un changement de position et/ou d'orientation du boîtier décodeur (11) si le nombre de lignes communes est inférieur à un deuxième seuil de détection prédéterminé.

5.  Procédé d'optimisation selon la revendication 4, comprenant en outre les étapes de :

    - calculer un indice de confiance qui dépend du premier nombre et du deuxième nombre ;
    - comparer l'indice de confiance avec un seuil de confiance prédéterminé ;
    - décider, en fonction d'un résultat de ladite comparaison, de valider ou non un résultat de l'étape de détection du changement de position et/ou d'orientation.

6. Procédé d'optimisation selon la revendication 1, dans lequel les nouveaux paramètres audio comprennent un gain appliqué sur un volume courant, qui dépend de la position d'écoute optimale initiale (U) et de la nouvelle position et/ou de la nouvelle orientation du boîtier décodeur (11).

7. Procédé d'optimisation selon la revendication 1, dans lequel le boîtier décodeur (11) comprend au moins deux haut-parleurs (14a, 14b), la production des nouveaux paramètres audio comprenant l'étape d'ajuster une balance audio entre lesdits au moins deux haut-parleurs.

8. Procédé d'optimisation selon la revendication 2, dans lequel le boîtier décodeur comprend un premier haut-parleur (14a) et un deuxième haut-parleur (14b), le procédé d'optimisation comprenant les étapes de :

- déterminer, en utilisant la matrice d'homographie planaire, un premier angle ($\beta_1$) entre un axe de référence ($A_o$) de la au moins une image initiale ($I_0$) passant par la position d'écoute optimale initiale (U), et un premier axe courant ($A_{n1}$) passant par la position d'écoute optimale initiale et le premier haut-parleur (14a) dans la au moins une image courante, et un deuxième angle ($\beta_2$) entre l'axe de référence et un deuxième axe courant ($A_{n2}$) passant par la position d'écoute optimale initiale et le deuxième haut-parleur (14b) dans la au moins une image courante ;
- déterminer, en utilisant la matrice d'homographie planaire, une première distance ($d_1$) entre la position d'écoute optimale initiale et le premier haut-parleur (14a), et une deuxième distance ($d_2$) entre la position d'écoute optimale initiale et le deuxième haut-parleur (14b) ;
- utiliser une méthode d'ambisonie pour placer des sources sonores virtuelles (25) autour de la position d'écoute optimale initiale en calculant des gains qui dépendent du premier angle, du deuxième angle, de la première distance et de la deuxième distance, les nouveaux paramètres audio comprenant lesdits gains.

9. Procédé d'optimisation selon la revendication 8, le procédé d'optimisation utilisant, pour définir les nouveaux paramètres audio, une table de correspondance prédéfinie (26) qui associe des paramètres audio précalculés à des indications de distance et/ou d'angle représentatifs du changement de position et/ou d'orientation du boîtier décodeur.

10. Procédé d'optimisation selon la revendication 4, comprenant les étapes, pour déterminer la nouvelle position du boîtier décodeur (11), de :

- détecter un angle particulier qui est le plus présent dans l'ensemble de coordonnées polaires comprenant les premières coordonnées polaires des premières lignes et les deuxièmes coordonnées polaires des deuxièmes lignes ;
- si un nombre de fois où ledit angle particulier est présent dans l'ensemble de coordonnées polaires est supérieur à un seuil d'angle prédéterminé, en déduire que le boîtier décodeur (11) a possiblement subi un déplacement latéral perpendiculairement à un axe optique de la caméra (18) ;
- estimer ledit déplacement latéral en fonction des distances des premières coordonnées polaires des premiers lignes et des deuxièmes coordonnées polaires deuxièmes lignes ayant pour angle l'angle particulier.

11. Procédé d'optimisation selon la revendication 1, dans lequel l'action corrective consiste à définir une nouvelle position d'écoute optimale associée à la nouvelle position et/ou à la nouvelle orientation du boîtier décodeur, et à indiquer à un utilisateur la nouvelle position d'écoute optimale pour que celui-ci l'utilise.

12. Boîtier décodeur (11) comprenant au moins un haut-parleur (14a, 14b) et auquel au moins une caméra (18) est solidarisée, le boîtier décodeur comprenant en outre une unité de traitement (22) dans laquelle est mise en œuvre le procédé d'optimisation selon l'une des revendications précédentes.

13. Programme d'ordinateur comprenant des instructions qui conduisent l'unité de traitement (22) du boîtier décodeur (11) selon la revendication 12 à exécuter les étapes du procédé d'optimisation selon l'une des revendications 1 à 11.

14. Support d'enregistrement lisible par ordinateur, sur lequel est enregistré le programme d'ordinateur selon la revendication 13.

**Patentansprüche**

1. Optimierungsverfahren zur Optimierung einer Tonwiedergabe durch eine an ein Fernsehgerät angeschlossene Decoderbox (11), die zumindest einen Lautsprecher (14a, 14b) umfasst und mit welcher zumindest eine Kamera (18) fest verbunden ist, wobei das Verfahren die Schritte umfasst, dass:

- zumindest ein von der Kamera (18) erzeugtes Ausgangsbild ($I_0$) erfasst wird, wenn sich die Decoderbox (11) in einer Ausgangsposition und einer Ausgangsausrichtung befindet, wobei die Decoderbox (11) dabei Ausgangs-Audioparameter verwendet, um die Tonwiedergabe zu optimieren;
- anschließend zumindest ein von der Kamera (18) erzeugtes aktuelles Bild erfasst wird;
- das zumindest eine aktuelle Bild und das zumindest eine Ausgangsbild analysiert werden, um eine Positions- und/oder Ausrichtungsänderung der Decoderbox (11) zu erkennen;
- zumindest eine Korrekturmaßnahme durchgeführt wird, um die Tonwiedergabe nach erfolgter Positions- und/oder Ausrichtungsänderung der Decoderbox (11) zu optimieren, wobei die Korrekturmaßnahme die Schritte umfasst, dass:

  ∘ eine neue Position und/oder eine neue Ausrichtung der Decoderbox (11) ermittelt wird, indem in einem an das zumindest eine aktuelle Bild gekoppelten Bezugssystem Koordinaten einer optimalen Ausgangs-Hörposition (U) ermittelt werden, für welche die Tonwiedergabe optimiert war, als sich die Decoderbox (11) in der Ausgangsposition und in der Ausgangsausrichtung befand;
  ∘ neue Audioparameter erzeugt werden, um die Tonwiedergabe zu optimieren, wenn sich die Decoderbox in der neuen Position und/oder in der neuen Ausrichtung befindet, sodass die Tonwiedergabe wieder für die optimale Ausgangs-Hörposition (U) optimiert ist.

2. Optimierungsverfahren nach Anspruch 1, wobei die Analyse des zumindest einen aktuellen Bildes und des zumindest einen Ausgangsbildes die Schritte umfasst, dass:

- eine planare Homographie-Matrix ermittelt wird, die es erlaubt, von dem zumindest einen aktuellen Bild in das zumindest eine Ausgangsbild zu wechseln;
- **die planare** Homographie-Matrix analysiert wird, um die Positions- und/oder Ausrichtungsänderung der Decoderbox (11) zu erkennen.

3. Optimierungsverfahren nach Anspruch 2, wobei die Analyse der planaren Homographie-Matrix die Schritte umfasst, dass:

- die planare Homographie-Matrix mit einer Identitätsmatrix verglichen wird;
- keine Positions- oder Ausrichtungsänderung der Decoderbox (11) erkannt wird, wenn ein Absolutwert einer Differenz zwischen jedem Element der planaren Homographie-Matrix und einem jeweils entsprechenden Element der Identitätsmatrix unter einem vorbestimmten ersten Erkennungsschwellenwert liegt;
- andernfalls eine Positions- und/oder Ausrichtungsänderung der Decoderbox (11) erkannt wird.

4. Optimierungsverfahren nach Anspruch 1, wobei die Analyse des zumindest einen aktuellen Bildes und des zumindest einen Ausgangsbildes ($I_0$) die Schritte umfasst, dass:

- in dem zumindest einen Ausgangsbild ($I_0$) unter Anwendung einer Hough-Transformation eine erste Anzahl von ersten Zeilen ($D_{0i}$) erkannt wird, die jeweils erste Polarkoordinaten ($\rho,\theta$) aufweisen;
- in dem zumindest einen aktuellen Bild unter Anwendung der Hough-Transformation eine zweite Anzahl von zweiten Zeilen erkannt wird, die jeweils zweite Polarkoordinaten aufweisen;
- eine für das zumindest eine Ausgangsbild und für das zumindest eine aktuelle Bild gemeinsame Anzahl von Zeilen festgestellt wird;
- eine Positions- und/oder Ausrichtungsänderung der Decoderbox (11) erkannt wird, wenn die gemeinsame Anzahl von Zeilen unter einem zweiten vorbestimmten Erkennungsschwellenwert liegt.

5. Optimierungsverfahren nach Anspruch **4,** ferner die Schritte umfassend, dass:

- ein Konfidenzindex berechnet wird, der von der ersten Zeilenanzahl und der zweiten Zeilenanzahl abhängt;
- der Konfidenzindex mit einem Konfidenzschwellenwert verglichen wird;
- in Abhängigkeit von einem Ergebnis dieses Vergleichs entschieden wird, ob ein Ergebnis des Erkennungsschritts zur Erkennung der Positions- und/oder Ausrichtungsänderung bestätigt wird oder nicht.

6. **Optimierungsverfahren** nach Anspruch 1, wobei die neuen Audioparameter eine Verstärkung umfassen, die auf eine aktuelle Lautstärke angewandt wird und von der optimalen Ausgangs-Hörposition (U) und der neuen Position und/oder der neuen Ausrichtung der Decoderbox (11) abhängt.

7. Optimierungsverfahren nach Anspruch 1, wobei die Decoderbox (11) zumindest zwei Lautsprecher (14a, 14b) umfasst, wobei die Erzeugung der neuen Audioparameter den Schritt umfasst, dass eine Audiobalance zwischen den zumindest zwei Lautsprechern eingestellt wird.

8. Optimierungsverfahren nach Anspruch 2, wobei die Decoderbox einen ersten Lautsprecher (14a) und einen zweiten Lautsprecher (14b) umfasst, wobei das Optimierungsverfahren die Schritte umfasst, dass:

   - unter Anwendung der planaren Homographie-Matrix ein erster Winkel ($\beta_1$), gebildet zwischen einer Bezugsachse ($A_0$) des zumindest einen Ausgangsbildes ($I_0$), welche durch die optimale Ausgangs-Hörposition (U) hindurch verläuft, und einer ersten aktuellen Achse ($A_{n1}$) in dem zumindest einen aktuellen Bild, welche durch die optimale Ausgangs-Hörposition und den ersten Lautsprecher (14a) hindurch verläuft, sowie ein zweiter Winkel ($\beta_2$), gebildet zwischen der Bezugsachse und einer zweiten aktuellen Achse ($A_{n2}$) in dem zumindest einen aktuellen Bild, welche durch die optimale Ausgangs-Hörposition und den zweiten Lautsprecher (14b) hindurch verläuft, ermittelt werden;
   - unter Anwendung der planaren Homographie-Matrix eine erste Entfernung ($d_1$) zwischen der optimalen Ausgangs-Hörposition und dem ersten Lautsprecher (14a), sowie eine zweite Entfernung ($d_2$) zwischen der optimalen Ausgangs-Hörposition und dem zweiten Lautsprecher (14b) ermittelt werden;
   - ein Ambisonie-Verfahren verwendet wird, um durch Berechnung von Verstärkungen, die von dem ersten Winkel, dem zweiten Winkel, der ersten Entfernung und der zweiten Entfernung abhängen, virtuelle Schallquellen (25) um die optimale Ausgangs-Hörposition herum zu setzen, wobei die neuen Audioparameter diese Verstärkungen umfassen.

9. Optimierungsverfahren nach Anspruch 8, wobei das Optimierungsverfahren zur Festlegung der neuen Audioparameter eine vorbestimmte Zuordnungstabelle (26) verwendet, welche vorberechnete Audioparameter jenen Entfernungsangaben und/oder Winkelangaben zuordnet, die die Positions- und/oder Ausrichtungsänderung der Decoderbox darstellen.

10. Optimierungsverfahren nach Anspruch **4,** welche zur Bestimmung der neuen Position der Decoderbox (11) die Schritte umfasst, dass:

    - ein bestimmter Winkel erkannt wird, welcher in dem Polarkoordinatensatz, der die ersten Polarkoordinaten der ersten Zeilen und die zweiten Polarkoordinaten der zweiten Zeilen umfasst, am häufigsten vorkommt;
    - wenn die Häufigkeit, mit welcher dieser bestimmte Winkel in dem Polarkoordinatensatz vorkommt, einen vorbestimmten Winkel-Schwellenwert überschreitet, daraus abgeleitet wird, dass die Decoderbox (11) möglicherweise eine seitliche Verschiebung senkrecht zu einer optischen Achse der Kamera (18) erfahren hat;
    - diese seitliche Verschiebung in Abhängigkeit von jenen Entfernungen zwischen den ersten Polarkoordinaten der ersten Zeilen und den zweiten Polarkoordinaten der zweiten Zeilen, welche als Winkel den bestimmten Winkel aufweisen, berechnet wird.

11. Optimierungsverfahren nach Anspruch 1, wobei die Korrekturmaßnahme darin besteht, eine neue optimale Hörposition zu definieren, welche der neuen Position und/oder der neuen Ausrichtung der Decoderbox zugeordnet ist, und besagte neue optimale Hörposition einem Benutzer bekanntzugeben, damit sich dieser dorthin begeben kann.

12. Decoderbox (11), die zumindest einen Lautsprecher (14a, 14b) umfasst und mit welcher zumindest eine Kamera (18) fest verbunden ist, wobei die Decoderbox ferner eine Verarbeitungseinheit (22) umfasst, in welcher das Optimierungsverfahren nach einem der vorhergehenden Ansprüche ausgeführt wird.

13. Computerprogramm, das Befehle umfasst, welche die Verarbeitungseinheit (22) der Decoderbox (11) nach Anspruch 12 dazu veranlassen, die Schritte des Optimierungsverfahren nach einem der Ansprüche 1 bis **11** auszuführen.

14. Computerlesbares Speichermedium, auf welchem das Computerprogramm nach Anspruch 13 abgespeichert ist.

**Claims**

1. Optimisation method for a sound playback performed by a set-top box (11) connected to a television and which comprises at least one speaker (14a, 14b) and to which at least one camera (18) is secured, comprising the steps of:

. acquiring at least one initial image ($I_0$) produced by the camera (18) while the set-top box (11) is located in an initial position and in an initial orientation, the set-top box (11) thus using initial audio parameters to optimise the sound playback;
. then, acquiring at least one current image produced by the camera (18);
. analysing the at least one current image and the at least one initial image to detect a change of position and/or orientation of the set-top box (11);
. performing at least one corrective action making it possible to optimise the sound playback following the change of position and/or orientation of the set-top box (11), the corrective action comprising the steps of:

. determining a new position and/or a new orientation of the set-top box (11), by determining, in a system linked to the at least one current image, coordinates of an initial optimal listening position (U), wherein the sound playback was optimised, while the set-top box (11) was in the initial position and the initial orientation;
. producing new audio parameters to optimise the sound playback, while the set-top box is in the new position and/or the new orientation, such that the sound playback is again optimised in the initial optimal listening position (U).

2. Optimisation method according to claim 1, wherein the analysis of the at least one current image and of the at least one initial image comprises the steps of:

. determining a planar homography matrix making it possible to pass from the at least one current image to the at least one initial image;
. analysing said planar homography matrix to detect the change of position and/or orientation of the set-top box (11).

3. Optimisation method according to claim 2, wherein the analysis of the planar homography matrix comprises the steps of:

. comparing said planar homography matrix with an identity matrix;
. not detecting a change of position, nor orientation of the set-top box (11) when an absolute value of a difference between each element of the planar homography matrix and a corresponding element of the identity matrix is less than a predetermined first detection threshold;
. detecting a change of position and/or orientation of the set-top box (11) otherwise.

4. Optimisation method according to claim 1, wherein the analysis of the at least one current image and of the at least one initial image ($I_0$) comprises the steps of:

. detecting in the at least one initial image ($I_0$), by using a Hough transform, a first number of first lines ($D_{0i}$) each having first polar coordinates ($\rho,\theta$);
. detecting in the at least one current image, by using the Hough transform, a second number of second lines each having second polar coordinates;
. evaluating a number of lines common to the at least one initial image and to the at least one current image;
. detecting a change of position and/or orientation of the set-top box (11) if the number of common lines is less than a predetermined second detection threshold.

5. Optimisation method according to claim 4, further comprising the steps of:

. calculating a confidence index which depends on the first number and on the second number;
. comparing the confidence index with a predetermined confidence threshold;
. deciding, according to a result of said comparison, to validate or not, a result of the step of detecting the change of position and/or orientation.

6. Optimisation method according to claim 1, wherein the new audio parameters comprise a gain applied onto a current volume, which depends on the initial optimal listening position (U) and on the new position and/or on the new orientation of the set-top box (11).

7. Optimisation method according to claim 1, wherein the set-top box (11) comprises at least two speakers (14a, 14b), the production of new audio parameters comprising the step of adjusting an audio balance between said at least two speakers.

8. Optimisation method according to claim 2, wherein the set-top box comprises a first speaker (14a) and a second speaker (14b), the optimisation method comprising the steps of:

. determining, by using the planar homography matrix, a first angle ($\beta_1$) between a reference axis ($A_o$) of the at least one initial image ($I_0$) passing through the initial optimal listening position (U), and a first current axis ($A_{n1}$) passing through the initial optimal listening position and the first speaker (14a) in the at least one current image, and a second angle ($\beta_2$) between the reference axis and a second current axis ($A_{n2}$) passing through the initial optimal listening position and the second speaker (14b) in the at least one current image;
. determining, by using the planar homography matrix, a first distance ($d_1$) between the initial optimal listening position and the first speaker (14a), and a second distance ($d_2$) between the initial optimal listening position and the second speaker (14b);
. using an ambisonic method for placing virtual sound sources (25) around the initial optimal listening position by calculating gains which depend on the first angle, on the second angle, on the first distance and on the second distance, the new audio parameters comprising said gains.

9. Optimisation method according to claim 8, the optimisation method using, to define the new audio parameters, a predefined cross-reference table (26) which associates precalculated audio parameters with distance and/or angle indications representative of the change of position and/or orientation of the set-top box.

10. Optimisation method according to claim 4, comprising the steps, to determine the new position of the set-top box (11), of:

. detecting a particular angle which is the most present in the set of polar coordinates comprising the first polar coordinates of the first lines and the second polar coordinates of the second lines;
. if a number of times where said particular angle is present in the set of polar coordinates is greater than a predetermined angle threshold, deducing from this that the set-top box (11) has possibly undergone a lateral movement perpendicularly to an optical axis of the camera (18);
. estimating said lateral movement according to the distances of the first polar coordinates of the first lines and of the second polar coordinates of the second lines having the particular angle as the angle.

11. Optimisation method according to claim 1, wherein the corrective action consists of defining a new optimal listening position associated with the new position and/or with the new orientation of the set-top box, and of indicating the new optimal listening position to a user, so that they use it.

12. Set-top box (11) comprising at least one speaker (14a, 14b) and to which at least one camera (18) is secured, the set-top box further comprising a processing unit (22), wherein the optimisation method according to one of the preceding claims is implemented.

13. Computer program comprising instructions which make the processing unit (22) of the set-top box (11) according to claim 12 execute the steps of the optimisation method according to one of claims 1 to 11.

14. Recording medium which can be read by a computer, on which the computer program according to claim 13 is recorded.

Fig. 1

Fig. 2

Fig. 3

Fig. 4

Fig. 5

Fig. 6

Fig. 7

Fig. 8

Fig. 9

Fig. 10

## RÉFÉRENCES CITÉES DANS LA DESCRIPTION

**Documents brevets cités dans la description**

- US 2018192189 A1
- US 2016134986 A1

- US 2019075418 A1

**Littérature non-brevet citée dans la description**

- Creating Full View Panoramic Image Mosaics and Environment Maps, Richard Szeliski and Heung-Yeung Shum, qui fait partie de l'ouvrage. *SIGGRAPH '97: Proceedings of the 24th annual conference on Computer graphics and interactive techniques*, 03 August 1997, ISBN 978-0-89791-896-1, 251-258